# EUROPEAN PATENT SPECIFICATION

(11) **EP 2 823 716 B1**
(45) Date of publication and mention of the grant of the patent: **28.03.2018**
(21) Application number: 13191830.2
(22) Date of filing: 06.11.2013
(51) Int. Cl.: A23L 29/219, A23L 19/18, A23P 20/12

(54) **Aqueous starch-containing compositions for coating food products**
Wässrige, stärkehaltige Zusammensetzungen zur Beschichtung von Nahrungsmitteln
Compositions contenant de l'amidon aqueuse pour enrobage de produits alimentaires

(30) Priority: 11.07.2013 US 201361845164 P
(43) Date of publication of application: 14.01.2015
(73) Proprietor: Hume, Pamela Elizabeth, North Yorkshire YO13 0PL (GB); Rose, Melissa, Buckingham MK18 4JQ (GB)
(72) Inventor: Hume, Pamela Elizabeth, North Yorkshire YO13 0PL (GB); Rose, Melissa, Buckingham MK18 4JQ (GB)
(74) Representative: Jones, Nicholas Andrew

(56) References cited:
- EP-A2- 0 480 433
- US-A- 5 750 168
- US-A- 5 997 918

## Description

### FIELD

The present disclosure relates to an aqueous composition for coating food products such as French fries and to a process for preparing fried, coated food products such as fried, coated potato articles.

### BACKGROUND

Fried, coated food products such as fried, coated potato articles and processes for the preparation thereof are known.

For example, PCT Application Publication No. 99/21444 discloses a method for producing a reheatable food product comprising a step of adjusting the water binding capacity of the coating, a coating suitable for application to such a food product and a food product coated with such a coating. A preferred coating composition comprises gelatinised starch obtainable from at least two sources, preferably potato and pea.

Melvej (US Patent No. 5,997,918) discloses starch-containing coating materials for food products such as potato strips as well as food products coated with such a material. The coating materials may include a chemically cross-linked and stabilized modified tapioca starch and a modified high amylose corn starch. However, Melvej teaches that chemically cross-linked modified corn starch is preferred over high amylose corn starch or modified high amylose corn starch for providing viscosity in the aqueous slurry and uniform structure and crispness in the finished product. The exemplary formulations contain a maximum of 1.25 wt% of modified high amylose corn starch.

Woerman et al. (US Patent No. 5,750,168) discloses aqueous starch enrobing slurries for coating the outer surface of a potato product which contain an ungelatinized cross-linked tapioca starch, processes for preparing such slurries, frozen potato products with a film-like coating on their outer surface and processes for their preparation. The coatings are taught to form a discontinuous film which is preferably somewhat brittle. While other starches such as corn starch may optionally be used in the aqueous starch enrobing slurries, Woerman et al. teaches that certain improved properties are provided in the absence of corn starch.

It would be desirable to be provided with a composition for coating food products such as potato articles and processes for preparing fried, coated food products such as fried, coated potato articles that would at least partially solve one of the problems mentioned or that would be an alternative to the known compositions for coating food products such as potato articles and processes for preparing fried, coated food products such as fried, coated potato articles.

### SUMMARY

In the present disclosure, aqueous compositions for coating food products such as potato articles, for example French fries and processes for preparing fried, coated food products such as fried, coated potato articles, for example fried, coated French fries have been developed. Food products such as fried, coated potato articles, for example fried, coated French fries have been prepared using such aqueous compositions and processes.

Accordingly, the present disclosure includes an aqueous composition for coating a food product, the aqueous composition comprising:
a hydroxypropylated, cross-linked tapioca starch; and
an acetylated, high amylose maize starch,
wherein the hydroxypropylated, cross-linked tapioca starch is present in an amount of from 45 wt% to 65 wt% on a dry weight basis;
wherein the acetylated, high amylose maize starch is present in an amount of from 15 wt% to 35 wt% on a dry weight basis;
wherein the hydroxypropylated, cross-linked tapioca starch is a hydroxypropyl di-starch phosphate; and
wherein the ratio by weight of the hydroxypropylated, cross-linked tapioca starch to the acetylated, high amylose maize starch on a dry weight basis is from 60:40 to 80:20.

In an embodiment, the aqueous composition further comprises xanthan gum present in an amount of from about 0.025 wt% to about 1 wt% on a dry weight basis. In another embodiment, the aqueous composition further comprises a flour selected from rice flour and an ancient grain flour, present in an amount of e.g. from about 10 wt% to about 30 wt% on a dry weight basis.

In another embodiment of the present disclosure, the ratio by weight of the hydroxypropylated, cross-linked tapioca starch to the acetylated, high amylose maize starch on a dry weight basis is about 70:30.

The present disclosure also includes a process for preparing fried, coated food products, the process comprising:
coating food products with an aqueous starch-containing batter consisting of an aqueous composition of the present disclosure to obtain batter-coated food products; and
frying the batter-coated food products to obtain the fried, coated food products.

In an embodiment, the process is a process for preparing fried, coated vegetable articles, the process comprising:
coating blanched vegetable articles with an aqueous starch-containing batter consisting of an aqueous composition of the present disclosure to obtain batter-coated vegetable articles; and
frying the batter-coated vegetable articles to obtain the fried, coated vegetable articles.

In an embodiment, the vegetable articles are potato articles.

In another embodiment, the blanched potato articles are prepared by a process comprising:
blanching potato articles under conditions to obtain freshly blanched potato articles;
dipping the freshly blanched potato articles in a solution that inhibits discoloration of the blanched potato articles to obtain blanched, dipped potato articles; and
partially drying the blanched, dipped potato articles under conditions to obtain a moisture reduction of from 8 wt% to 10 wt% in the freshly blanched potato articles to obtain the blanched potato articles.

In an embodiment, the fried, coated potato article is a fried, coated French fry.

In an embodiment, the coating provides a continuous film over an individual blanched vegetable article that remains continuous through the frying step.

Also described herein is a fried, coated food product prepared according to a process for preparing fried, coated food products of the present disclosure. In an embodiment, the fried, coated food product is a fried, coated French fry.

Further described herein is a fried food product comprising a coating prepared from an aqueous composition for coating food products of the present disclosure. In an embodiment, the fried food product is a fried French fry.

### BRIEF DESCRIPTION OF THE DRAWINGS

The present disclosure will now be described in greater detail with reference to the drawings, in which:

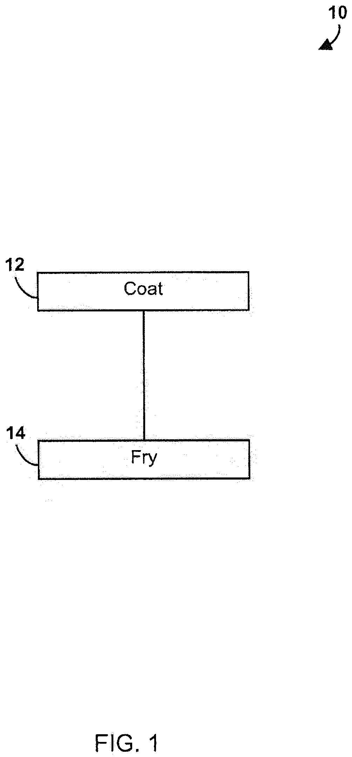

Figure 1 is a schematic diagram of a process according to an embodiment of the present disclosure.

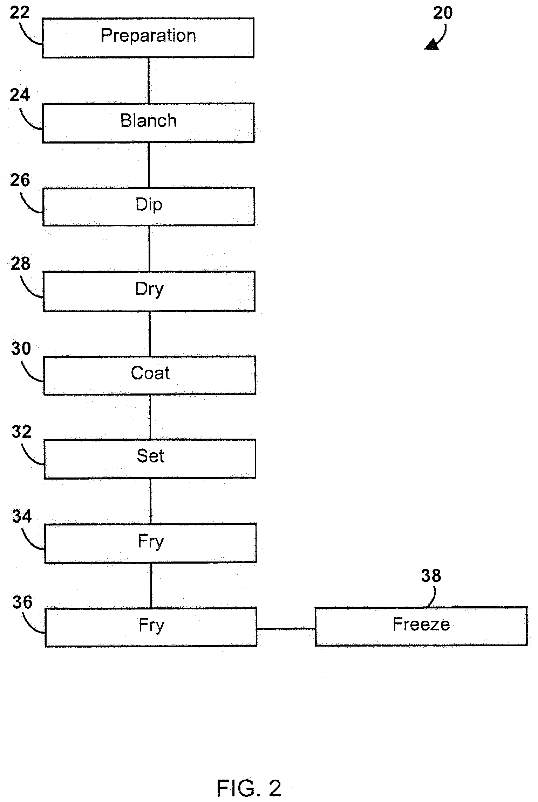

Figure 2 is a schematic diagram of a process according to another embodiment of the present disclosure.

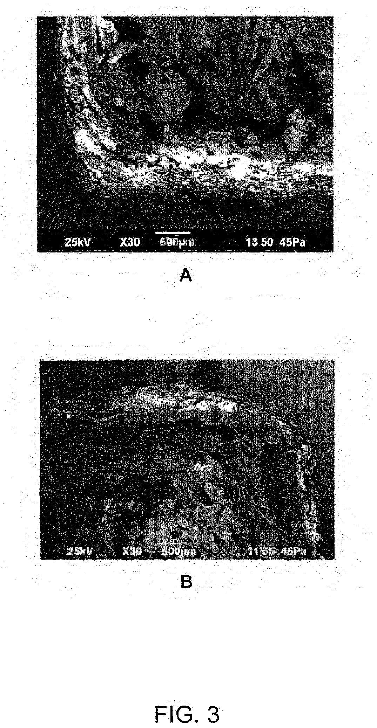

Figure 3 shows exemplary osmium-stained images of cross-sections of a fried, uncoated French fry control (A) and a fried, coated French fry (B). The coating of the fried, coated French fry shown in (B) comprises a hydroxypropylated, cross-linked tapioca starch (Purity™ 4) and an acetylated high amylose maize starch (Crispfilm™) in a ratio by weight of the hydroxypropylated, cross-linked tapioca starch to the acetylated high amylose maize starch of about 70:30. The oil appears white in the images as a result of the osmium staining.

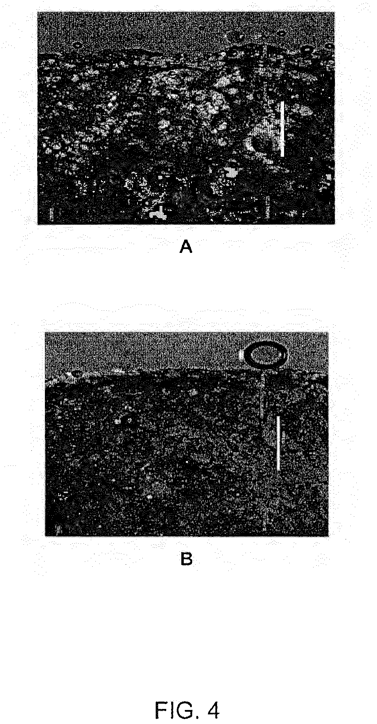

Figure 4 shows exemplary confocal microscopy images of cross-sections of a fried, uncoated French fry control (A) and a fried, coated French fry (B). The coating of the fried, coated French fry shown in (B) comprises a hydroxypropylated, cross-linked tapioca starch (Purity™ 4) and an acetylated high amylose maize starch (Crispfilm™) in a ratio by weight of the hydroxypropylated, cross-linked tapioca starch to the acetylated high amylose maize starch of about 70:30. Nile red dye used for the confocal microscopy images highlights the oil as yellow in color images. The oil appears as light grey in the greyscale images of Figure 4. The scale bar correlates to a length of 1.0 mm.

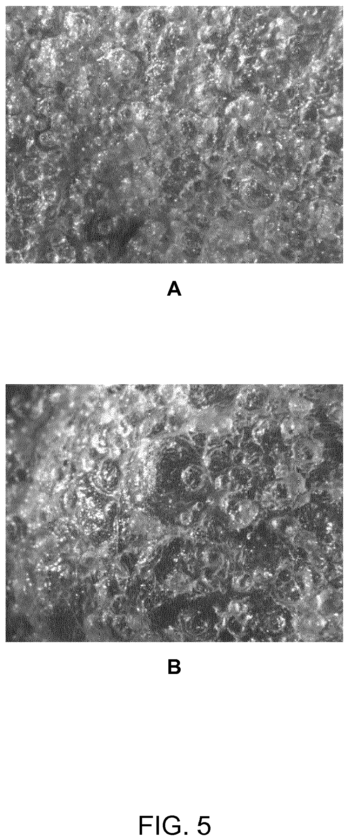

Figure 5 shows exemplary stereomicrograph images of fried coatings comprising a hydroxypropylated, cross-linked tapioca starch (Purity™ 4) and an acetylated high amylose maize starch (Crispfilm™) in a ratio by weight of the hydroxypropylated, cross-linked tapioca starch to the acetylated high amylose maize starch of about 70:30 (A) and about 30:70 (B).

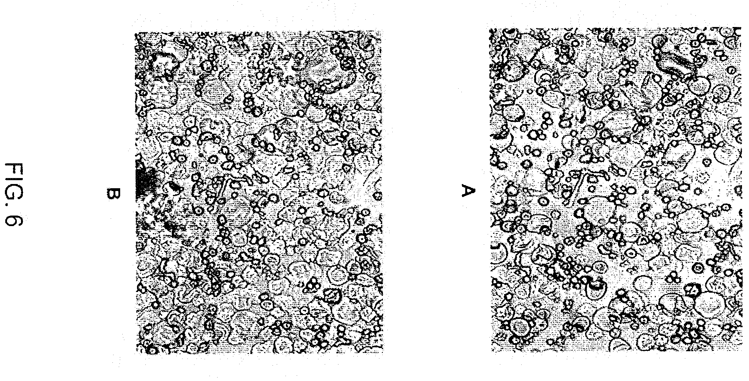

Figure 6 shows exemplary hot stage microscopy images of a mixture comprising a hydroxypropylated, cross-linked tapioca starch (Purity™ 4) and an acetylated, high amylose maize starch (Crispfilm™) in a ratio by weight of the hydroxypropylated, cross-linked tapioca starch to the acetylated high amylose maize starch of about 70:30.

### DETAILED DESCRIPTION

### I. Definitions

Unless otherwise indicated, the definitions and embodiments described in this and other sections are intended to be applicable to all embodiments and aspects of the disclosure herein described for which they are suitable as would be understood by a person skilled in the art.

As used in this application, the singular forms "a", "an" and "the" include plural references unless the content clearly dictates otherwise.

In embodiments comprising an "additional" or "second" component, the second component as used herein is different from the other components or first component. A "third" component is different from the other, first, and second components, and further enumerated or "additional" components are similarly different.

In understanding the scope of the present disclosure, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. The term "consisting" and its derivatives, as used herein, are intended to be closed terms that specify the presence of the stated features, elements, components, groups, integers, and/or steps, but exclude the presence of other unstated features, elements, components, groups, integers and/or steps. The term "consisting essentially of", as used herein, is intended to specify the presence of the stated features, elements, components, groups, integers, and/or steps as well as those that do not materially affect the basic and novel characteristic(s) of features, elements, components, groups, integers, and/or steps.

Terms of degree such as "substantially", "about" and "approximately" as used herein mean a reasonable amount of deviation of the modified term such that the end result is not significantly changed. These terms of degree should be construed as including a deviation of at least ±5% of the modified term if this deviation would not negate the meaning of the word it modifies.

The term "dry weight basis" as used herein, includes the moisture content naturally present in a starch.

The term "actual solids ratio" as used herein refers to a solids ratio obtained using instrumentation for measuring solids such as a Sartorious, which measures the actual solids % in a slurry.

Certain terms which are used herein refer to items which may be known under more than one name in the English language. A person skilled in the art would readily understand that the term "maize starch" as used herein refers to a starch which may also be known as "corn starch".

The term "native starch" as used herein refers to a starch extracted from a starch-bearing crop in its natural form, i.e. the starch has not been chemically, enzymatically and/or physically modified, and includes a starch extracted from a starch-bearing crop that has been bred and/or genetically engineered to have a different amylose content in its starch.

The term "modified starch" as used herein refers to a starch that has been prepared by chemically treating a native starch and may also be referred to herein as being a "chemically modified starch", as being "chemically modified" or as having "chemical modifications" and the like. In an embodiment, the chemically modified starch is substituted and/or cross-linked. In another embodiment, the chemically modified starch is substituted and cross-linked. In a further embodiment of the present application, the chemically modified starch is substituted.

The term "substituted" and the like as used herein in reference to a starch means that the starch has been chemically modified via the addition of at least one type of chemical blocking group to the starch polymer backbone. Substitution may, for example lower the gelatinization temperature of a starch and/or stabilize a starch, which may, for example inhibit retrogradation. The effect that this has on process stability is useful to its function. It will be appreciated that retrogradation is a process occurring after starch gelatinization, when the paste is subject to cooling. During cooling, the linear portions of amylose and amylopectin chains realign themselves, as the starch is crystalizing. Retrogradation of the long chain amylose occurs at a rate which is more rapid than amylopectin retrogradation. Amylopectin retrogradation happens at a rate which is dependent, for example on the temperature, moisture content and chain lengths of the amylopectin side branches. It will be appreciated that water repulsion, commonly known as "syneresis" can occur during retrogradation. Substitution is useful for amylose-containing starches to prevent the re-association of amylose molecules, as the blocking agents inhibit this, giving, for example, a more freeze/thaw stable product.

In an embodiment, the chemical blocking group is a hydroxypropyl group, in which case the starch is referred to herein as being "hydroxypropylated". In another embodiment, the chemical blocking group (i.e. the substitution) is an acetyl group, in which case the starch is referred to herein as being "acetylated". Acetylated starches are generally less freeze thaw stable than hydroxypropylated starches. Substituted starches may be commercially available and/or they may be prepared by a suitable synthetic route. Regulatory agencies such as the United States Food and Drug Administration (FDA) may set limits on the amount of substitution in starches used for food applications. The selection of a starch having a substitution level meeting the regulatory standards for a food application can be made by a person skilled in the art.

The term "cross-linked" and the like as used herein in reference to a starch means that the starch has been chemically modified via the introduction of covalent bonds within the starch so that inter- and/or intramolecular bridges (i.e. cross-links) are formed between starch polymer backbones. Cross-linking may, for example control granular swelling and/or inhibit viscosity breakdown through processing. As the number of cross-links is increased, the starch generally becomes more tolerant to conditions such as heat, acid and shears. Cross-linked starches may be commercially available and/or they may be prepared by a suitable synthetic route. For example, a cross-linked starch can be obtained from a process comprising the reaction of a starch with a suitable cross-linking agent under conditions to form the cross-linked starch. Regulatory agencies such as the United States Food and Drug Administration (FDA) may set limits on the amount of cross-links in starches used for food applications. The selection of a starch having a cross-linking level meeting the regulatory standards for a food application can be made by a person skilled in the art.

The term "cross-linking agent" as used herein refers to a reagent that reacts with a starch to form cross-links within the starch under conditions to form a cross-linked starch. In an embodiment, the cross-linking agent is phosphorous oxychloride (POCl₃).

### II. Compositions

In the present disclosure, aqueous compositions for coating food products such as potato articles, for example French fries have been developed. Food products such as fried, coated potato articles, for example fried, coated French fries have been prepared using such aqueous compositions. Compositions comprising various ratios of a substituted, cross-linked starch such as a hydroxypropylated, cross-linked tapioca starch and a high amylose maize starch such as an acetylated, high amylose maize starch were studied in the studies of the present disclosure. Finish-fried, 9.5 mm (3/8 inch) cut French fries coated with a composition comprising a substituted, cross-linked starch and a high amylose maize starch were observed in the present studies to have higher values for fat reduction in comparison to conventional batters. Finish-fried, 9.5 mm (3/8 inch) cut French fries coated with a composition comprising a ratio by weight of a tapioca starch with a hydroxypropyl di-starch phosphate modification to an acetylated, high amylose maize starch of 70:30 on a dry weight basis were observed to have values for average fat that were reproducible; i.e. had a low standard deviation between trials. Consistency of result is very advantageous for a commercial food product. Food service restaurants often attempt to achieve consistent product quality and attributes. Low fat food products should also be reliably produced so that low-fat claims made to the public and any regulatory authorities can be substantiated upon testing of the food product, even though different batches of the composition were used.

Accordingly, the present disclosure includes an aqueous composition for coating a food product, the aqueous composition comprising:
a hydroxypropylated, cross-linked tapioca starch present in an amount of from 45 wt% to 65 wt% on a dry weight basis; and
an acetylated, high amylose maize starch present in an amount of from 15 wt% to 35 wt% on a dry weight basis,
wherein the hydroxypropylated, cross-linked tapioca starch is a hydroxypropyl di-starch phosphate; and
wherein the ratio by weight of the hydroxypropylated, cross-linked tapioca starch to the acetylated, high amylose maize starch on a dry weight basis is from 60:40 to 80:20.

In an embodiment, the hydroxypropylated, cross-linked starch has cross-links comprising phosphate esters.

In an embodiment, the hydroxypropylated, cross-linked tapioca starch is a hydroxypropyl di-starch phosphate having a tapioca base such as Purity™ 4. Other hydroxypropyl di-starch phosphates having a tapioca base are also known such as Purity™ 87 or National Frigex™ HV. In an embodiment, the acetylated, high amylose maize starch is a starch acetate such as Crispfilm™.

In an embodiment, the hydroxypropylated, cross-linked tapioca starch has a viscosity of about 300 to about 400 BU at a solids ratio of about 13.5%.

In an embodiment of the present disclosure, the hydroxypropylated, cross-linked starch has been prepared from a native starch in a one stage process. In another embodiment, the hydroxypropylated, cross-linked starch has been prepared from a native starch in a two stage process, the first stage comprising a substitution of the native starch, for example with propylene oxide under conditions to give a hydroxypropylated starch and the second stage comprising a cross-linking of the hydroxypropylated starch with a cross-linking agent under conditions to give the hydroxypropylated, cross-linked starch. In a further embodiment, the cross-linking agent is phosphorous oxychloride.

While not wishing to be limited by theory, it is believed that the first substitution stage of such a two-stage process opens up the starch granule so that a cross-linking agent used in the second stage may gain greater access into the starch granule and may penetrate deeper within the matrix. Starches prepared by such a two stage process may, for example be more stable at frying temperatures and/or may have useful moisture management properties such as binding water which may allow better function of the starches upon frying than substituted, cross-linked starches such as hydroxypropylated, cross-linked starches prepared by a one-stage process.

It will be appreciated that the amylose content of the substituted, cross-linked starch will depend, for example on the source of the starch. In an embodiment, the hydroxypropylated, cross-linked tapioca starch has an amylose content of from about 15 wt% to about 19 wt%. In another embodiment, the hydroxypropylated, cross-linked tapioca starch has an amylose content of about 17 wt%.

In an embodiment, the high amylose maize starch is a native high amylose maize starch. In another embodiment, the native high amylose maize starch has an amylose content of about 50 wt% to about 80 wt%. In an embodiment, the native high amylose maize starch has an amylose content of at least about: 50 wt%, 70 wt% or 80 wt%, optionally about: 50 wt%, 70 wt% or 80 wt%.

It will be appreciated that the amylose content of the acetylated, high amylose maize starch will depend, for example on the particular native high amylose maize starch used in the preparation of the acetylated, high amylose maize starch. High amylose maize starches are those having an amylose content of at least about 50 wt%. In an embodiment, the acetylated, high amylose maize starch has an amylose content of from about 50 wt% to about 80 wt%. In another embodiment, the acetylated, high amylose maize starch has an amylose content of from about 50 wt% to about 70 wt%. In a further embodiment, the acetylated, high amylose maize starch has an amylose content of at least about: 50 wt% or 70 wt%, optionally about: 50 wt% or 70 wt%. In a further embodiment of the present disclosure, the acetylated, high amylose maize starch has an amylose content of about 68 wt%. It will be appreciated that the high amylose content of the high amylose maize starch is useful, for example to create a strong linear film in, for example a par-fry stage of the processes of the present disclosure and/or to inhibit re-absorption of oil when a food product coated with a coating prepared from the aqueous compositions of the present disclosure exits an operator's fryer. It will also be appreciated that there are other sources of useful high amylose starches.

In an embodiment, the amylose content of the aqueous composition is from about 20 wt% to about 40 wt%, about 27 wt% to about 32 wt%, about 25 wt% to about 29 wt%, about 30 wt% to about 34 wt%, about 27 wt% or about 32 wt%. In another embodiment of the present disclosure, the amylose content of the aqueous composition is about 27 wt%. In a further embodiment, the amylose content of the aqueous composition is about 33 wt%.

In an embodiment, the ratio by weight of the hydroxypropylated, cross-linked starch to the acetylated, high amylose maize starch on a dry weight basis is about 70:30.

In an embodiment, the hydroxypropylated, cross-linked starch is present in an amount of from about 50 wt% to about 60 wt% on a dry weight basis. In another embodiment, the acetylated, high amylose maize starch is present in an amount of from about 20 wt% to about 30 wt% on a dry weight basis.

In an embodiment, the aqueous composition has an actual solids ratio of about 20 wt% to about 70 wt%, about 30 wt% to about 45 wt% or about 36 wt% based on the total weight of the aqueous composition.

While not wishing to be limited by theory, the addition of suitable amounts of a flour such as rice flour may, for example be useful in film formation as it may at least partially fill in holes in the film. Rice flour may also be useful for color blending and/or final crispness in a fried food product coated with a coating comprising rice flour. Flours made from ancient grains such as quinoa and spelt may also be useful in the aqueous compositions of the present disclosure. Accordingly, in an embodiment, the aqueous composition optionally further comprises one or more flours selected from a rice flour and an ancient grain flour such as quinoa flour or spelt flour. In an embodiment, the aqueous composition further comprises rice flour in an amount of from about 10 wt% to about 30 wt%, about 15 wt% to about 25 wt% or about 20 wt% on a dry weight basis.

In an embodiment, the aqueous composition optionally further comprises a salt suitable for use in food applications. It will be appreciated that regulatory agencies may set limits on the amount and/or types of salt used in foods. The selection of a suitable salt and amount thereof to meet the regulatory standards for a food application can be made by a person skilled in the art. It will also be appreciated that salt may contribute, for example to flavor, to starch order, and may hold onto some available moisture in a coating, thereby lowering a starch gelatinization temperature. Accordingly, in an embodiment the salt comprises, consists essentially of or consists of one or more of sodium chloride (NaCl), potassium chloride (KCl) and calcium chloride (CaCl₂). In another embodiment, the salt comprises, consists essentially of or consists of sodium chloride. In a further embodiment, the aqueous composition comprises a salt such as sodium chloride in an amount of about 5 wt% to about 10 wt% on a dry weight basis. In another embodiment, the aqueous composition comprises a salt such as sodium chloride in an amount of about 7.4 wt% on a dry weight basis.

In an embodiment of the present disclosure, the aqueous composition optionally further comprises a stabilizer, for example an agent that assists in keeping starches in suspension in their cold state. It will be appreciated that such an agent is useful for example, for processing. The selection of a suitable stabilizer, for example, the agent that assists in keeping starches in suspension in their cold state for a particular aqueous composition will depend, for example, on factors such as cost and/or the desired viscosity of the aqueous composition and can be made by a person skilled in the art. In an embodiment, the stabilizer, for example the agent that assists in keeping starches in suspension in their cold state comprises, consists essentially of or consists of xanthan gum. In an embodiment, the aqueous composition comprises xanthan gum in an amount of from about 0 wt% to about 5 wt% or about 0 wt% to about 1 wt% on a dry weight basis. In another embodiment, the aqueous composition comprises xanthan gum in an amount of less than about 5 wt% or less than about 1 wt% on a dry weight basis. In another embodiment, the xanthan gum is present in an amount of about 0.025 wt% to about 1 wt% on a dry weight basis. In a further embodiment, the aqueous composition comprises xanthan gum in an amount of from about 0.05 wt% to about 0.5 wt% on a dry weight basis.

In an embodiment, the aqueous composition optionally further comprises at least one coloring agent. Coloring agents are known in the art and the selection of a suitable coloring agent for a particular aqueous composition of the present disclosure can be made by a person skilled in the art. For example, for at least some uses, it would be useful to select a coloring agent which may give a substantially smooth, even color through a fried, coated food product that has an absence of visual pieces as would be observed for coatings comprising ground colors such as those comprising brown spices. Accordingly, in an embodiment, the at least one coloring agent comprises, consists essentially of or consists of at least one oil soluble extract having at least one coloring compound therein. In another embodiment, the at least one coloring agent comprises, consists essentially of or consists of at least one of paprika extract (also known as paprika oleoresin) and turmeric extract. In another embodiment, the at least one coloring agent comprises, consists essentially of or consists of paprika extract and turmeric extract. It will be appreciated that an extract such as turmeric extract or paprika extract may also be used as a flavoring agent as well as a coloring agent. However, it will be appreciated that at low levels, such an extract is added to the aqueous composition as a coloring agent. In an embodiment, the aqueous composition comprises turmeric extract in an amount of from about 0 wt% to about 5 wt% or about 0 wt% to about 1 wt% on a dry weight basis. In another embodiment, the aqueous composition comprises turmeric extract in an amount of less than about 5 wt% or less than about 1 wt% on a dry weight basis. In another embodiment, the aqueous composition comprises turmeric extract in an amount of from about 0.05 wt% to about 5 wt% or about 0.1 wt% to about 1 wt% on a dry weight basis. In another embodiment, the aqueous composition comprises paprika extract in an amount of from about 0 wt% to about 5 wt% or about 0 wt% to about 1 wt% on a dry weight basis. In another embodiment, the aqueous composition comprises paprika extract in an amount of less than about 5 wt% or less than about 1 wt% on a dry weight basis. In another embodiment, the aqueous composition comprises paprika extract in an amount of from about 0.05 wt% to about 5 wt% or about 0.1 wt% to about 1 wt% on a dry weight basis. Coloring agents such as paprika extract and turmeric extract are available from commercial sources.

In an embodiment, the aqueous composition optionally further comprises an anti-caking agent such as silicon dioxide in a fine powder form. The selection of a suitable silicon dioxide for a particular aqueous composition of the present disclosure and/or use thereof can be made by a person skilled in the art. It will be appreciated that an anti-caking agent may be useful as a processing aid, for example in a plant environment. It will also be appreciated that whether or not silicon dioxide would be useful as a processing aid will depend, for example on the particular plant. In an embodiment, the aqueous composition comprises silicon dioxide in an amount of less than about 1 wt% or less than about 0.1 wt% on a dry weight basis. In another embodiment, the aqueous composition comprises from about 0.01 wt% to about 0.1 wt% silicon dioxide.

In an embodiment, the aqueous composition comprises, consists essentially of or consists of:
water present in an amount of from about 30 wt% to about 80 wt%;
rice flour present in an amount of from about 10 wt% to about 30 wt% on a dry weight basis;
salt present in an amount of about 5 wt% to about 10 wt% on a dry weight basis;
turmeric extract present in an amount of less than about 5 wt% on a dry weight basis;
paprika extract present in an amount of less than about 5 wt% on a dry weight basis;
xanthan gum present in an amount of less than about 5 wt% on a dry weight basis;
optionally silicon dioxide present in an amount of less than about 1 wt% on a dry weight basis;
a hydroxypropylated, cross-linked tapioca starch present in an amount of from 45 wt% to 65 wt% on a dry weight basis; and
an acetylated, high amylose maize starch present in an amount of from 15 wt% to 35 wt% on a dry weight basis,
wherein the ratio by weight of the hydroxypropylated, cross-linked tapioca starch to the acetylated, high amylose maize starch on a dry weight basis is from 60:40 to 80:20.

In another embodiment, the aqueous composition comprises, consists essentially of or consists of:
water present in an amount of from about 55 wt% to about 70 wt% or about 64 wt%;
rice flour present in an amount of from about 15 wt% to about 25 wt% or about 20 wt% on a dry weight basis;
salt present in an amount of about 7.4 wt% on a dry weight basis;
turmeric extract present in an amount of less than about 1 wt% on a dry weight basis;
paprika extract present in an amount of less than about 1 wt% on a dry weight basis;
xanthan gum present in an amount of less than about 1 wt% on a dry weight basis;
optionally silicon dioxide present in an amount of less than about 0.1 wt% on a dry weight basis;
a hydroxypropylated, cross-linked tapioca starch present in an amount of from about 50 wt% to about 60 wt% on a dry weight basis; and
an acetylated, high amylose maize starch present in an amount of from about 20 wt% to about 30 wt% on a dry weight basis,
wherein the ratio by weight of the hydroxypropylated, cross-linked tapioca starch to the acetylated, high amylose maize starch on a dry weight basis is about 70:30.

In an embodiment, the substituted, cross-linked starch and the high amylose maize starch together comprise about 70 wt% of dry ingredients in the aqueous composition.

The present disclosure also includes a composition for use in an aqueous starch-containing batter for coating a food product, the composition comprising:
a hydroxypropylated, cross-linked tapioca starch present in an amount of from 45 wt% to 65 wt%; and
an acetylated, high amylose maize starch present in an amount of from 15 wt% to 35 wt%,
wherein the ratio by weight of the substituted, cross-linked starch to the high amylose maize starch is from 60:40 to 80:20.

The composition for use in an aqueous starch-containing batter for coating a food product of the present disclosure may be varied as discussed above in relation to a corresponding embodiment for an aqueous composition for coating a food product of the present disclosure except in so far as those embodiments which relate specifically to an aqueous composition, for example solids ratios. A person skilled in the art would readily understand which embodiments relate specifically to an aqueous composition. A person skilled in the art would also be able to, for example convert values given on a dry weight basis in embodiments relating to the aqueous compositions for coating a food product of the present disclosure to wt% of a composition for use in an aqueous starch-containing batter for coating a food product of the present disclosure.

A person skilled in the art would readily understand how to prepare an aqueous starch-containing batter for coating a food product using a composition for use in an aqueous starch-containing batter for coating a food product of the present disclosure. For example, the dry ingredients of the composition for use in an aqueous starch-containing batter for coating a food product are mixed with water according to proportions described in the present disclosure.

The present disclosure also includes a kit for making batter, the kit comprising the substituted, cross-linked starch and the high amylose maize starch as dry ingredients for a kit user to mix according to proportions described in the present disclosure, and optionally with written instructions for making a batter.

In an embodiment of the present disclosure, the food product is a fried, coated food product. In another embodiment, the food product is a fried, coated vegetable article. In another embodiment, the fried, coated vegetable article optionally further comprises additional food components such as non-vegetable components. In a further embodiment, the food product is a fried, coated root vegetable article. In another embodiment, the food product is a fried, coated tuberous root vegetable article. It is an embodiment that the food product is a fried, coated potato article. In an embodiment, the fried, coated potato article is prepared from a potato article comprising at least a portion of any processing variety of potato or any processing variety of sweet potato. In another embodiment, the potato article is selected from a whole potato, a potato half, a potato quarter, a potato wedge, a potato strip or stick, a potato cube, a potato slice and a novelty cut of potato such as but not limited to a spiral shape. In another embodiment, the potato article is selected from a potato wedge and a potato strip or stick. In a further embodiment, the potato article is a potato strip or stick. It is an embodiment that the food product is a fried, coated French fry or a fried, coated sweet potato fry. In another embodiment, the food product is a fried, coated French fry. In an embodiment, the food product is a fried, coated sweet potato fry. The selection of a suitable cut of potato for a fried, coated French fry or a fried, coated sweet potato fry can be made by a person skilled in the art. In an embodiment, the food product is a fried, coated shoestring French fry or a fried, coated square cut French fry. Example cut sizes are 7.1 to 7.5 mm (9/32 to 19/64 inch) shoestring cut French fries or 4.8 to 38 mm (3/16 inch to 1.5 inch) square cut French fries. Optionally, the French fries are sliced as 9.5 mm (3/8 inch) cut French fries. In an embodiment, the potato article is a 7.1 to 7.5 mm (9/32 to 19/64 inch) cut for shoestring cut French fries or a 4.8 to 38 mm (3/16 inch to 1.5 inch) cut for square cut French fries. Optionally, the potato articles are sliced for 9.5 mm (3/8 inch) cut French fries.

### III. Processes

In the present disclosure, processes for preparing fried, coated food products such as fried, coated potato articles, for example fried, coated French fries have been developed. Food products such as fried, coated potato articles, for example fried, coated French fries have been prepared using such processes. Such processes have been observed in the present disclosure to produce a fried, coated French fry having a coating that is a continuous film. Such processes have also been observed in the present disclosure to produce a finish-fried, coated French fry having a reduced percentage of fat in comparison to a finish-fried, uncoated French fry prepared by the same process. Such processes have also been observed in the present disclosure to produce a finish-fried, coated French fry having a higher value of fat reduction in comparison to conventional batters. Processes comprising coating blanched 9.5 mm (3/8 inch) cut potato strips with an aqueous starch-containing batter comprising a tapioca starch with a hydroxypropyl di-starch phosphate modification and an acetylated, high amylose maize starch in a ratio by weight of about 70:30 on a dry weight basis were observed to have values for average fat that were reproducible; i.e. had a low standard deviation between trials.

An exemplary process flow diagram is shown in Figure 1. The exemplified process 10 is a process for preparing fried, coated food products such as fried, coated potato articles. Referring to Figure 1, in the exemplified process 10, food products such as blanched potato articles (not shown) are coated in a coating step 12 with an aqueous starch-containing batter of the present disclosure to obtain batter-coated food products such as batter-coated potato articles (not shown). The batter-coated food products such as batter-coated potato articles (not shown) are then fried in a frying step 14 to obtain the fried, coated food products such as fried, coated potato articles (not shown).

Accordingly, the present disclosure includes a process for preparing fried, coated food products, the process comprising:
coating food products with an aqueous starch-containing batter to obtain batter-coated food products, the aqueous starch-containing batter comprising:
   a hydroxypropylated, cross-linked tapioca starch present in an amount of from 45 wt% to 65 wt% on a dry weight basis; and
   an acetylated, high amylose maize starch present in an amount of from 15 wt% to 35 wt% on a dry weight basis,
   wherein the hydroxypropylated, cross-linked tapioca starch is a hydroxypropyl di-starch phosphate; and
   wherein the ratio by weight of the hydroxypropylated, cross-linked tapioca starch to the acetylated, high amylose maize starch on a dry weight basis is from 60:40 to 80:20; and
frying the batter-coated food products to obtain the fried, coated food products.

The present disclosure also includes a process for preparing fried, coated food products, the process comprising:
coating food products with an aqueous starch-containing batter comprising, consisting essentially of or consisting of an aqueous composition of the present disclosure to obtain batter-coated food products; and
frying the batter-coated food products to obtain the fried, coated food products.

In an embodiment of the present disclosure, the fried, coated food product is a fried, coated vegetable article. In another embodiment, the vegetable article optionally further comprises additional food components such as non-vegetable components. In another embodiment, the fried, coated food product is a fried, coated root vegetable article. In a further embodiment, the fried, coated food product is a fried, coated tuberous root vegetable article. It is an embodiment that the fried, coated food product is a fried, coated potato article.

Accordingly, the present disclosure also includes a process for preparing fried, coated vegetable articles, the process comprising:
coating blanched vegetable articles with an aqueous starch-containing batter to obtain batter-coated vegetable articles, the aqueous starch-containing batter comprising:
   a hydroxypropylated, cross-linked tapioca starch present in an amount of from 45 wt% to 65 wt% on a dry weight basis; and
   an acetylated, high amylose maize starch present in an amount of from 15 wt% to 35 wt% on a dry weight basis,
   wherein the hydroxypropylated, cross-linked tapioca starch is a hydroxypropyl di-starch phosphate; and
   wherein the ratio by weight of the hydroxypropylated, cross-linked tapioca starch to the acetylated, high amylose maize starch on a dry weight basis is from 60:40 to 80:20; and
frying the batter-coated vegetable articles to obtain the fried, coated vegetable articles.

The present disclosure also includes a process for preparing fried, coated vegetable articles, the process comprising:
coating blanched vegetable articles with an aqueous starch-containing batter comprising, consisting essentially of or consisting of an aqueous composition of the present disclosure to obtain batter-coated vegetable articles; and
frying the batter-coated vegetable articles to obtain the fried, coated vegetable articles.

The present disclosure further includes a process for preparing fried, coated potato articles, the process comprising:
coating blanched potato articles with an aqueous starch-containing batter to obtain batter-coated potato articles, the aqueous starch-containing batter comprising:
   a hydroxypropylated, cross-linked tapioca starch present in an amount of from 45 wt% to 65 wt% on a dry weight basis; and
   an acetylated, high amylose maize starch present in an amount of from 15 wt% to 35 wt% on a dry weight basis,
   wherein the hydroxypropylated, cross-linked tapioca starch is a hydroxypropyl di-starch phosphate; and
   wherein the ratio by weight of the substituted, cross-linked starch to the high amylose maize starch on a dry weight basis is from 60:40 to 80:20; and
frying the batter-coated potato articles to obtain the fried, coated potato articles.

The present disclosure further includes a process for preparing fried, coated potato articles, the process comprising:
coating blanched potato articles with an aqueous starch-containing batter comprising, consisting essentially of or consisting of an aqueous composition of the present disclosure to obtain batter-coated potato articles; and
frying the batter-coated potato articles to obtain the fried, coated potato articles.

Figure 2 shows an embodiment of a process for preparing fried, coated potato articles of the present disclosure. Referring to Figure 2, in the exemplified process 20, potatoes (not shown) are prepared in a preparation step 22 to obtain potato articles (not shown). The potato articles (not shown) are then blanched in a blanching step 24 to obtain blanched potato articles (not shown). The blanched potato articles (not shown) optionally undergo a dipping step 26 and/or a drying step 28 prior to being coated with an aqueous starch-containing batter of the present disclosure in coating step 30 to obtain batter-coated potato articles (not shown). The batter-coated potato articles (not shown) then optionally undergo a setting step 32 prior to being fried in one or two frying steps (34, 36) to obtain fried, coated potato articles (not shown). The fried, coated potato articles are then optionally frozen in a freezing step 38. The process is described herein with respect to potatoes for illustrative purposes. The most common par-fried vegetable products are made from potatoes.

The operations carried out in the preparation step 22 will depend on the desired fried, coated potato article to be prepared in the process. The preparation step 22 can include but is not limited to operations such as grading the potatoes to select potatoes of a desired shape and/or size, washing the potatoes, for example to remove soil, peeling the potatoes to remove at least a portion of the peel on the potatoes, pre-heating the potatoes, for example using a hot water bath and cutting and/or processing the potatoes to a desired shape and/or size. The selection of suitable operations to be carried out in the preparation step 22 for a particular fried, coated potato article can be made by a person skilled in the art. For example, if potato skin is to be retained on the fried, coated potato article, the preparation step 22 includes washing the potatoes.

The potatoes used in the processes for preparing fried, coated potato articles of the present disclosure can be of any processing variety including, but not limited to, Maris Piper, Pentland Dell, Markies, Shepody, Premiere, Russet Burbank, Bintje, Innovator and Morene. The potatoes used in the processes can also be of any processing variety of sweet potatoes. It will be readily apparent that parameters may be adapted depending on the type of potato variety used, since different varieties can, for example have different contents of sugars and other solids, and depending on whether a potato or a sweet potato is used in the processes. It will also be readily apparent that one can adapt the potato methods and apparatus to other root vegetables such as but not limited to yams, carrots and beets.

In an embodiment, the potatoes are cut into a desired shape and/or size to obtain the potato articles. For example, if the process for preparing fried, coated potato articles is a process for preparing fried, coated French fries or fried, coated sweet potato fries, the potatoes can be cut into shapes that are commonly referred to in the art as sticks or strips, for example longitudinal sticks or strips. The selection of a suitable cut of potato for a fried, coated French fry or a fried, coated sweet potato fry can be made by a person skilled in the art. Alternatively, the potatoes are cut into, for example but not limited to halves, quarters, wedges, cubes, slices or a novelty cut such as but not limited to a spiral shape. Alternatively, the potatoes are not cut after washing and optionally peeling, and the potato articles comprise the whole, washed and optionally peeled potatoes. Accordingly, in an embodiment, the potato article is selected from a whole potato, a potato half, a potato quarter, a potato wedge, a potato strip or stick, a potato cube, a potato slice and a novelty cut of potato such as but not limited to a spiral shape. In another embodiment, the potato article is selected from a potato wedge and a potato strip or stick. In a further embodiment, the potato article is a potato strip or stick. In an embodiment, the potato article is a 7.1 to 7.5 mm (9/32 to 19/64 inch) cut for shoestring cut French fries or a 4.8 to 38 mm (3/16 inch to 1.5 inch) cut for square cut French fries. Optionally, the potato articles are sliced for 9.5 mm (3/8 inch) cut French fries. It will be appreciated that the shape and/or size of the potato article can have an influence on the fat content of the fried, coated potato article.

In the blanching step 24, enzymes can be inactivated and/or sugars removed from the surface of the potato articles which, if not removed, may cause discoloration of the potato articles. In the blanching step 24, potato articles are blanched for a time and at a temperature under conditions to obtain the blanched potato articles. The conditions to obtain the blanched potato articles may vary, for example based on the size and the shape of the potato articles. The selection of suitable conditions to obtain the desired blanched potato articles can be made by a person skilled in the art. In an embodiment, the potato articles are blanched by immersing the potato articles in heated water, for example in a hot water bath for a time and at a temperature to obtain the blanched potato articles. In another embodiment, the time to obtain the blanched potato articles is from about 8 to about 20 minutes at a temperature of from about 70°C to about 90°C. Alternatively, the potato articles are blanched by exposing the potato articles to heated steam for a time and at a temperature to obtain the blanched potato articles. In an embodiment, the time to obtain the blanched potato articles is from about 5 minutes to about 10 minutes at a temperature of about 100°C. It will be appreciated that shorter blanching times may reduce cell damage and/or rupture. Accordingly, in an embodiment of the present disclosure, the potato articles are blanched for a minimal blanching time. In an embodiment, the minimal blanching time is a time of less than about 10 minutes.

It will be appreciated that blanched potato articles may undergo a discoloration that is commonly referred to as after-cooking darkening (ACD) due to a reaction comprising the oxidation of an iron-containing complex. While this discoloration has not been observed to significantly influence the coating of a fried, coated potato article, it will be appreciated that a consumer may, for example find a fried, coated potato article comprising a discolored potato to be cosmetically unappealing. Accordingly, in the optional dipping step 26, the blanched potato articles are immersed in a solution that inhibits discoloration of the potato articles due to iron oxidation. The selection of a suitable solution that inhibits discoloration of the potato articles due to iron oxidation can be made by a person skilled in the art. In an embodiment, the solution that inhibits discoloration of the potato articles due to iron oxidation comprises sodium acid pyrophosphate (SAPP). In another embodiment, the solution that inhibits discoloration of the potato articles due to iron oxidation comprises sodium acid pyrophosphate (SAPP) in an amount of about 0.6 wt% to about 1 wt%.

In the optional drying step 28, the blanched, optionally dipped potato articles are partially dried under conditions to obtain a desired moisture reduction in the blanched potato articles. Partially drying the potato articles equilibrates the moisture content of the blanched, optionally dipped potato articles, controlling the moisture loss in the fryer and/or creates a thin, partially gelatinized layer of starch on the surface of the blanched, optionally dipped potato articles. It will be appreciated that this surface layer will, for example allow better adhesion of a batter to the potato article and/or inhibit a further depth of oil penetration when frying. The conditions to obtain a desired moisture reduction in the potato articles may vary, for example based on the size and the shape of the blanched, optionally dipped potato articles, and the incoming solids. The selection of suitable conditions can be made by a person skilled in the art. The conditions are generally plant-specific and are controlled with relative humidity (RH%). In an embodiment, the drying step 28 comprises placing the blanched, optionally dipped potato articles in an elevated temperature environment such as a drying oven at a temperature and for a time to obtain the desired moisture reduction. In another embodiment, the time to obtain the desired moisture reduction is from about 5 minutes to about 15 minutes at a temperature of about 30°C to about 70°C. Alternatively, the drying step 28 comprises drying the blanched, optionally dipped potato articles at ambient temperature for a time to obtain the desired moisture reduction. It is an embodiment of the present disclosure that the moisture reduction is about 6 wt% to about 10 wt% based on the total weight of the potato articles. In another embodiment, the moisture reduction is about 8 wt% to about 10 wt% or about 8 wt% to about 9 wt%.

In coating step 30, the blanched, optionally dipped, optionally partially dried potato articles are coated with an aqueous starch-containing batter of the present disclosure to obtain batter-coated potato articles. Conditions for coating blanched, optionally dipped, optionally partially dried potato articles are known in the art, for example those that comprise conventional coating equipment. In an embodiment, the conditions comprise using, for example but not limited to a waterfall enrober, a submerger enrober, spraying or dipping. The selection of suitable conditions for coating blanched, optionally dipped, optionally partially dried potato articles can be made by a person skilled in the art. In an embodiment of the present disclosure, the process comprises coating the blanched, optionally dipped, optionally partially dried potato articles with a submerger enrober such as a submerger enrober with an overflow curtain. Optionally, the batter-coated potato articles are passed before a blower subsequent to the coating step 30. The blower can remove, for example at least a portion of excess batter.

In an embodiment, the aqueous starch-containing batter is an aqueous composition for coating a food product of the present disclosure.

In the optional setting step 32, the batter-coated potato articles are set under conditions to obtain a desired adherence of the batter coating to the blanched, optionally dipped, optionally partially dried potato article. Conditions to obtain the desired adherence of the batter coating to the potato article may vary, for example based on the shape, size and/or surface area of the potato article. The selection of suitable conditions to obtain the desired adherence of the batter coating for a particular potato article can be made by a person skilled in the art. In an embodiment, the conditions comprise setting the batter-coated potato articles for a time and at a temperature to obtain the desired adherence. A time of at least about 20 seconds is useful to allow sufficient adherence of the batter coating to the potato article. In an embodiment, the temperature is an ambient temperature, for example from about 18°C to about 25°C. In an embodiment, the conditions to obtain the desired adherence comprise conveying the batter-coated potato articles from a batter-coating location to a frying location in the process of the present disclosure at an ambient temperature, for example from about 18°C to about 25°C. In another embodiment, the conditions to obtain the desired adherence comprise setting the batter-coated potato articles for a time and at a temperature to obtain a desired moisture reduction. The desired moisture reduction will depend, for example, on the shape, size and/or surface area of the potato article. In an embodiment, the moisture reduction is from about 3 wt% to about 10 wt% based on the total weight of the batter-coated potato articles.

The fat content of a fried, coated potato article such as a fried, coated French fry may also depend, for example on the batter pick-up. It will be appreciated that a useful batter pick-up for a particular fried, coated potato article may depend, for example on the cut size of a potato article such as a potato strip or stick. In an embodiment of the present disclosure, the potato article is an about 9.5 mm (3/8 inch) cut potato strip or stick that is coated with an aqueous starch-containing batter of the present disclosure under conditions to obtain a batter-coated 9.5 mm (3/8 inch) cut potato strip or stick having a batter pick-up of about 11 wt% to about 13 wt% (measured after setting step 32, if the process comprises a setting step) based on the total weight of the batter-coated 9.5 mm (3/8 inch) cut potato strip or stick. In another embodiment, the batter-coated potato article is a batter-coated 9.5 mm (3/8 inch) cut potato strip or stick having a batter pick-up of about 12 wt% (measured after setting step 32, if the process comprises a setting step) based on the total weight of the batter-coated 9.5 mm (3/8 inch) cut potato strip or stick.

In the one or two frying steps (34, 36), the batter-coated potato articles are fried in oil under conditions to obtain the fried, coated potato articles. The conditions to obtain the fried, coated potato articles may vary, for example based on the size and shape of the potato articles. The selection of suitable conditions to obtain the desired fried, coated potato articles can be made by a person skilled in the art. In an embodiment, the step of frying comprises one step. In another embodiment of the processes of the present disclosure, the step of frying comprises two steps. For example, the batter-coated potato articles can be fried in a two stage fryer under conditions to obtain the fried, coated potato articles. In an embodiment of the processes of the present disclosure, the step of frying comprises par-frying the batter-coated potato articles to obtain par-fried, coated potato articles. In another embodiment, the step of frying comprises par-frying the batter-coated potato articles in a two stage fryer under conditions to obtain the par-fried, coated potato articles.

In an embodiment, the conditions to obtain the par-fried potato articles comprise frying the batter-coated potato articles in a first stage at a temperature and for a time so that the batter coating sets to a sufficient extent, for example at a temperature of at least about 160°C, for example about 160°C to about 175°C or about 172°C for a time of at least about 8 seconds, for example about 8 seconds to about 20 seconds or about 13 seconds, then frying in a second stage at a temperature and for a time that is sufficient to cook the batter and remove further moisture so as to obtain the par-fried, coated potato articles, for example at a temperature of at least about 170°C, for example about 170°C to about 185°C or about 176°C for a time of at least about 15 seconds, for example about 12 seconds to about 24 seconds or about 17 seconds.

In an embodiment, the total time for frying is from about 19 seconds to about 44 seconds or about 30 seconds. In an embodiment, the potato articles are 9.5 mm (3/8 inch) cut potato strips, the time of the first stage is about 13 seconds at a temperature of about 172°C, and the time of the second stage is about 17 seconds at a temperature of about 176°C. Such a time and temperature can minimize moisture removal and/or reduce cook-out and damage of the starch. It will be appreciated that conventional frying processes expel moisture from the batter then draw moisture from inside the product into the batter as the moisture originally in the batter is expelled. A hydroxypropylated, cross-linked starch such as a tapioca starch in the aqueous starch-containing batters of the present disclosure binds the moisture in the first stage of the fryer and continues to function in the second stage. A substituted, high amylose maize starch then sets down in this matrix and has a minimal function in the par-fry stage.

Oils used to fry batter-coated potato articles are known in the art such as but not limited to sunflower oil, non-hydrogenated canola oil and vegetable oil blends. In an embodiment, the oil comprises, consists essentially of or consists of sunflower oil, non-hydrogenated canola oil or a vegetable oil blend. In another embodiment, the oil comprises, consists essentially of or consists of sunflower oil or non-hydrogenated canola oil.

Subsequent to the one or two frying steps (34, 36) the fried, coated potato articles are removed from the fryer and optionally excess surface oil is removed, for example using an air blower. In an embodiment, the optional step of removing excess surface oil from the fried, coated potato articles comprises blowing air on the fried, coated potato articles for a time of about 2-3 seconds at ambient temperature.

In an embodiment of the present disclosure, the process optionally comprises a freezing step 38. For example, the fried, coated potato articles are optionally chilled and then subsequently frozen under conditions to obtain frozen, fried, coated potato articles. Such conditions are known in the art and the selection of suitable conditions to obtain the frozen, fried, coated potato articles can be made by a person skilled in the art. In an embodiment, the frozen, fried, coated potato articles have a temperature of a maximum of about -10°C. It will be appreciated that the frozen, fried, coated potato articles can be packaged using techniques that are well known in the art.

Methods for reconstituting frozen, fried, coated potato articles are known in the art. In an embodiment, the processes of the present disclosure optionally comprise a reconstitution frying step. For example, the frozen, fried, coated potato articles are fried under conditions to obtain finish-fried, coated potato articles such as finish-fried, coated French fries. Such conditions may vary, for example based on the size and/or the shape of the potato articles. The selection of suitable conditions to obtain the finish-fried, coated potato articles can be made by a person skilled in the art. In an embodiment, the finish-fried, coated potato articles are finish-fried, coated 9.5 mm (3/8 inch) cut French fries and the conditions to obtain the finished-fried, coated potato articles comprise frying in a suitable oil for a time of about 3 minutes at a temperature of about 175°C.

In an embodiment, the fried, coated potato articles have a coating that is a continuous film. In another embodiment, the coating provides a continuous layer over an individual blanched vegetable article such as an individual blanched potato article that remains continuous through the frying step.

In another embodiment, the process for preparing fried, coated vegetable articles comprises:
blanching vegetable articles to obtain blanched vegetable articles;
partially drying the blanched vegetable articles to obtain blanched, partially dried vegetable articles;
coating the blanched, partially dried vegetable articles with an aqueous starch-containing batter to obtain batter-coated vegetable articles, the aqueous starch-containing batter comprising:
   a hydroxypropylated, cross-linked tapioca starch present in an amount of from 45 wt% to 65 wt% on a dry weight basis; and
   an acetylated, high amylose maize starch present in an amount of from 15 wt% to 35 wt% on a dry weight basis,
   wherein the hydroxypropylated, cross-linked tapioca starch is a hydroxypropyl di-starch phosphate; and
   wherein the ratio by weight of the hydroxypropylated, cross-linked tapioca starch to the acetylated, high amylose maize starch on a dry weight basis is from 60:40 to 80:20; and
frying the batter-coated vegetable articles to obtain the fried, coated vegetable articles.

In another embodiment, the process for preparing fried, coated vegetable articles is a process for preparing frozen, fried, coated vegetable articles, comprising:
processing vegetables into a desired shape and/or size to obtain vegetable articles;
blanching the vegetable articles to obtain blanched vegetable articles;
contacting the blanched vegetable articles with a solution that reduces surface discoloration to obtain blanched, dipped vegetable articles;
partially drying the blanched, dipped vegetable articles to obtain blanched, dipped, partially dried vegetable articles;
coating the blanched, dipped, partially dried vegetable articles with an aqueous starch-containing batter to obtain batter-coated vegetable articles, the aqueous starch-containing batter comprising:
   a hydroxypropylated, cross-linked tapioca starch present in an amount of from 45 wt% to 65 wt% on a dry weight basis; and
   an acetylated, high amylose maize starch present in an amount of from 15 wt% to 35 wt% on a dry weight basis,
   wherein the hydroxypropylated, cross-linked tapioca starch is a hydroxypropyl di-starch phosphate; and
   wherein the ratio by weight of the hydroxypropylated, cross-linked tapioca starch to the acetylated, high amylose maize starch on a dry weight basis is from 60:40 to 80:20;
frying the batter-coated vegetable articles to obtain fried, coated vegetable articles; and
freezing the fried, coated vegetable articles to obtain the frozen, fried, coated vegetable articles.

### IV. Fried Food Products

In the present disclosure, aqueous compositions for coating food products such as potato articles, for example French fries and processes for preparing fried, coated food products such as fried, coated potato articles, for example fried, coated French fries have been developed. Food products such as fried, coated potato articles, for example fried, coated French fries have been prepared using such aqueous compositions and processes. Such compositions and processes have been observed in the present disclosure to produce a fried, coated French fry having a coating that is a continuous film. Such compositions and processes have also been observed in the present disclosure to produce a finish-fried, coated French fry having a reduced percentage of fat in comparison to a finish-fried, uncoated French fry prepared by the same process. Such processes and compositions have also been observed in the present disclosure to produce a finish-fried, coated French fry having a higher value of fat reduction in comparison to conventional batters. Processes comprising coating blanched 9.5 mm (3/8 inch) cut potato strips with a starch-containing batter consisting of an aqueous composition comprising a tapioca starch with a hydroxypropyl di-starch phosphate modification and an acetylated, high amylose maize starch in a ratio by weight of about 70:30 on a dry weight basis were observed to have values for average fat that were reproducible; i.e. had a low standard deviation between trials.

Accordingly, described herein is a fried food product comprising a coating prepared from an aqueous composition for coating a food product of the present disclosure.

In an embodiment, the fried food product is a fried vegetable article. In another embodiment, the vegetable article optionally further comprises additional food components such as non-vegetable components. In another embodiment, the fried food product is a fried root vegetable article. In a further embodiment, the fried food product is a fried tuberous root vegetable article. It is an embodiment that the fried food product is a fried potato article. In an embodiment, the fried potato article is prepared from a potato article comprising at least a portion of any processing variety of potato or any processing variety of sweet potato. In another embodiment, the potato article is selected from a whole potato, a potato half, a potato quarter, a potato wedge, a potato strip or stick, a potato cube, a potato slice and a novelty cut of potato such as but not limited to a spiral shape. In another embodiment, the potato article is selected from a potato wedge and a potato strip or stick. In a further embodiment, the potato article is a potato strip or stick. In an embodiment, the potato article is a 7.1 to 7.5 mm (9/32 to 19/64 inch) cut for shoestring cut French fries or a 4.8 to 38 mm (3/16 inch to 1.5 inch) cut for square cut French fries. Optionally, the potato articles are sliced for 9.5 mm (3/8 inch) cut French fries. It is an embodiment that the fried food product is a fried French fry or a fried sweet potato fry. In another embodiment, the fried food product is a fried French fry. In an embodiment, the fried food product is a fried sweet potato fry. The selection of a suitable cut of potato for a fried French fry or a fried sweet potato fry can be made by a person skilled in the art.

In another embodiment, the fried food product is a finish-fried, coated 9.5 mm (3/8 inch) cut French fry having a fat content that is reduced by about 23 wt% to about 33 wt%, about 25 wt% to about 30 wt% or about 30 wt% in comparison to a finish-fried, uncoated 9.5 mm (3/8 inch) cut French fry having a fat content of 11.55g/100g that has been prepared using the same process.

In an embodiment of the present disclosure, the coating is a continuous film.

In an embodiment, the fried food product is a par-fried food product. In another embodiment, the par-fried food product has been frozen. In a further embodiment, the fried food product is a finish-fried food product.

Further described herein is a fried, coated food product prepared according to a process for preparing fried, coated food products of the present disclosure.

The following non-limiting examples are illustrative of the present disclosure:

### EXAMPLES

### General Experimental Details

### I. Process

A pilot scale process based on a Stein pilot line was used in the studies of the present disclosure. Potatoes were placed in a rumbler, and excess skin was peeled by hand using a peeler. Potatoes were then cut with a pneumatic cutter to obtain potato strips having a 9.5 mm (3/8 inch) cut. The potato strips were blanched at 85°C in 6 kg batches for a typical time of about 7-9 minutes. The blanched potato strips were then dipped at a temperature of 65°C in a solution with a 1 wt% SAPP addition for a time of 1 minute. The blanched, dipped potato strips were then placed in a dryer at a temperature of 105°C for a typical time of about 12-14 minutes to achieve a moisture loss of 8-10 wt% based on the total weight of the potato article or as otherwise noted in results below. The blanched, dipped, partially dried potato strips were enrobed in the batter being tested in a submerger belt enrober with a curtain overflow. The batter pick-up was checked, and blowers were used, if required. The batter pick-up was targeted at 12 ± 1 wt% for the batter-coated potato strips of the present studies. A Stein APB was used for a set belt and fryer infeed belt. The batter-coated potato strips were fried in a one stage fryer, a Stein FA-5 (16" line) in sunflower oil at a temperature of 185°C for 30 seconds. The par-fried, coated potato strips were placed onto mesh racks, cooled and blast frozen to a temperature of -18°C. The fat content of the par-fried, coated potato strips was then analyzed using the method detailed below.

### II. Starches

Table 1 details some of the properties of the following water-binding starches used in the present studies: Purity™ 87, Purity™ NCSA, Purity™ SCSA, National Frigex™ HV and Purity™ 4. PURITY NCSA and PURITY SCSA are acetylated distarch phosphates of maize and waxy maize starches, respectively. The other starches are hydroxypropyl distarch phosphates of tapioca starch.

PURITY 4 is typically used in sauce applications, as it has a low hot viscosity, and is a fat mimetic which is typically used in dairy products. Starches having the modification type of PURITY 4 are commonly used for applications such as gravies, dips, sauces and fruit pie fillings, for example when a smooth, viscous, clear thickener with freeze-thaw stability would be useful.

Table 2 details some of the properties of the following high amylose maize starches that were used in the present studies: Crispfilm™, Hylon™ V, Hylon™ VII and Hylon™ VIII. CRISPFILM is a high amylose maize starch which has been chemically modified (stabilized) by acetylation. The other starches are native high amylose starches.

The amylose contents reported for the starches are taken from a Brabender curve, where viscosity is plotted and moisture content adjusted accordingly, typically based on solids on a dry weight basis.

### III. Batter Formulations

Chilled (5-10°C) water was weighed out and placed into a Stein PBM mixer. The other ingredients were weighed out and blended together to obtain a batter powder. The batter powder was weighed out, placed into the mixer at a ratio of 1 part batter powder to 1.5 parts water, and the mixture was mixed on low shear for 5 minutes to obtain the batter. The batter solids and viscosity were checked. All solids were targeted at 36% and B6 viscosity targeted at 5-6 seconds. Solids were measured using a Sartorious which measures the actual solids percent in the slurry. The batter was then transferred to an enrober.

In addition to the starches as set out in the tables, the formulations contained: rice flour, 10-30%; salt, 7.4%; spice extract (turmeric extract), 0-5%; stabilizer (xanthan gum), 0-5%; color (paprika extract), 0-5%; and an anticaking agent (silicon dioxide) <1%.

### IV. Testing of Fat and Moisture Content

Par-fried, coated potato strips prepared in the present studies were frozen at a maximum temperature of -18°C for at least 24 hours then fried in sunflower oil preheated to 175°C for a time of 3 minutes in a fryer basket that was shaken under the oil twice, halfway through the time. The French fries obtained were placed onto a plastic tray, cooled for 10 minutes then frozen at a temperature of -18°C for at least 24 hours. These steps were repeated until 5 batches of frozen French fries were obtained, then the 5 batches of frozen French fries were combined, ground in a mincer having a 3mm screen, and returned to the freezer. The frozen French fries were defrosted prior to commencing analysis. The fat content was analyzed using either the standard protocol for the Smart Trac Rapid Fat Analyzer manufactured by CEM or the standard Soxhlet process ISO 1442/1446. The moisture content was analyzed using the standard CEM protocol. Five replicates were tested for each sample. Samples tested had an average length specification of >80% >2" and >20% >3". Values for fat reduction in the tables are given in g/100g (wt%) in relation to an internal control having a fat content of 11.55g/100g and optionally the actual control that was tested on the day of the trials listed in the table.

### Example 1: Fat content of French fries coated with starch-containing batters

The process detailed above was used to study the various above-mentioned substituted, cross-linked starches and high amylose maize starches within batters used for coating finish-fried 9.5 mm (3/8 inch) cut French fries.

The water binding starches listed in Table 1 were screened initially before inclusion in the ratio trials (i.e. those trials in which the batter contained more than one type of starch) to study the effect on fat absorption of different modifications and/or botanical sources.

These water-binding starches were then tested in combination with the high amylose maize starches listed in Table 2 in the ratios set out in Table 3. The fat reduction of French fries coated with such formulations are given in comparison to a fried, uncoated French fry having a fat content of 11.55 g/100 g.

The combination of a chemically modified tapioca starch and the chemically modified high amylose maize starch CRISPFILM was found to be the most consistent at reducing fat content; i.e. there was a low standard deviation between trials using this combination of starches.

The amount of the E1442 chemically modified tapioca starch PURITY 4 in batter formulations was also tested. The results (see Table 4) show that an amount of this starch greater than or equal to 70% in a batter formulation gave an increased amount of fat reduction than amounts less than 70% in a formulation in comparison to a fried, uncoated French fry control.

Other ratios were studied, taking into consideration their theoretical amylose contents to test on the bench an amylose and gel strength theory. While not wishing to be limited by theory, a greater fat reduction can demonstrate a greater gel - film has been formed.

PURITY 4 was then used in batters in combination with the different high amylose maize starches listed in Table 6 in a ratio of PURITY 4 to the high amylose maize starch of 70:30.

To study the results of using a chemically modified tapioca starch versus a chemically modified maize starch and a chemically modified waxy maize starch, the high amylose maize starches CRISPFILM and HYLON VII were used in the same ratio as the results listed in Table 6 to PURITY NCSA and PURITY SCSA. The results of these studies are also detailed in Table 3.

The ratio of the chemically modified tapioca starch to CRISPFILM was then further studied against HYLON VII to investigate the strength of the amylose gels. A strong amylose gel is useful when trying to create a strong film that would stand up through a frying process such as the one described above which was used in the present studies. The higher the percentage of the high amylose starch such as CRISPFILM within these formulations, the higher the theoretical amylose content of the formulation (Table 7). The 70:30 ratio does not have the highest amylose content. However, there are other factors contributing to the strength of the film in a process which need to be considered and this appears to be a desired ratio for the times, temperature and limited water the product is subjected to in processes such as the one used in the present study.

To study this, further bench trials were conducted using the chemically modified high amylose maize starch CRISPFILM (50% amylose and substituted with acetate) at the same percentages as previously studied and then using two other native high amylose starches, those being HYLON V (50% amylose) and HYLON VII (70% amylose). Both HYLON starches require a higher cook out temperature than CRISPFILM, peak gel temperatures being approximately 100°C for HYLON V and 105°C for HYLON VII. Table 7 details the results of these studies. Increasing amylose content was shown not to always have a positive effect on fat reduction from the trials conducted. For example, it was observed that increasing the amylose content past a specific point may have a negative effect on fat reduction. Lowering the tapioca starch percentage was shown to generally have a negative effect on fat reduction.

Various formulations were also tested to study the effect of varying the amount of moisture reduction in the drying step of the process which is subsequent to the dipping step. A dryer loss of 8 - 10% was found to be useful based on fat results as well as sensory qualities of the fried, coated French fries. The results of these studies are shown in Table 8.

Overall, the most consistent results (i.e. results having a low standard deviation between trials) were observed to come from CRISPFILM in combination with the PURITY 4 in a ratio of PURITY 4 to CRISPFILM of 70:30.

Five large scale trials using formulations having a ratio of PURITY 4 to CRISPFILM of 70:30 were performed on a manufacturing line. The CRISPFILM had an amylose content of 50 wt%. Table 9 shows the average fat content of finish-fried 9.5 mm (3/8 inch) cut French fries and the standard deviation for each of the trials. The first three trials each had approximately 60 samples, the fourth trial had 10 samples, and the fifth trial had approximately 20 samples. Each of the trials was very consistent. The fifth trial had a lower average fat than the other trials. The fifth trial used new potatoes, which have a different starch make-up. The length of the finished fries in the fifth trial was also longer than the other trials.

### Example 2: Microscopy of coated and uncoated fried French fries

### I. Osmium Staining

Exemplary osmium-stained images of cross-sections of a fried, uncoated French fry control and a fried, coated French fry comprising a hydroxypropylated, cross-linked tapioca starch (Purity 4) and an acetylated high amylose maize starch (Crispfilm) in a ratio by weight of the hydroxypropylated, cross-linked tapioca starch to the acetylated high amylose maize starch of about 70:30 are shown in Figure 3A and Figure 3B, respectively. The oil appears white in these images as a result of the osmium staining.

The uncoated control (Figure 3A) shows a high percentage of oil penetrated through the coating and then into the first few cell layers of the potato. Damaged potato cells are also visible and oil would get into these very easily. In contrast, the image of the fried, coated French fry in Figure 3B shows the minimal penetration of the oil. The oil is visible on the surface and not really penetrating into the batter or potato cells. The potato cells also appear less damaged than those of the fried, uncoated French fry control shown in Figure 3A.

### II. Confocal Microscopy

Exemplary confocal microscopy images of cross-sections of a fried, uncoated French fry control and a fried, coated French fry comprising a hydroxypropylated, cross-linked tapioca starch (Purity 4) and an acetylated high amylose maize starch (Crispfilm) in a ratio by weight of the hydroxypropylated, cross-linked tapioca starch to the acetylated high amylose maize starch of about 70:30 are shown in Figure 4A and Figure 4B, respectively. Nile red dye used for the confocal microscopy images highlights the oil as yellow in color images. However, the oil appears as light grey in the greyscale images of Figure 4. The scale bar (white line) shown in Figure 4A and Figure 4B correlates to a length of 1.0 mm. The text located towards the right hand side of Figure 4A and Figure 4B, from bottom to top reads "normal cells", "collapsed cells" and "coating".

The level and depth of oil penetration is clear in both Figure 4A and Figure 4B. The depth of oil penetration is reduced dramatically in the fried, coated French fry shown in Figure 4B in comparison to the fried, uncoated French fry control that is shown in Figure 4A. The oil pools on the surface of the fried, coated French fry shown in Figure 4B.

### III. Stereomicrograph Images

Exemplary stereomicrograph images of fried coatings comprising a hydroxypropylated, cross-linked tapioca starch (Purity 4) and an acetylated high amylose maize starch (Crispfilm) in a ratio by weight of the hydroxypropylated, cross-linked tapioca starch to the acetylated high amylose maize starch of about 70:30 and about 30:70 are shown in Figure 5A and Figure 5B, respectively.

The film having a 30:70 ratio between the hydroxypropylated, cross-linked tapioca starch and the acetylated high amylose maize starch (Figure 5B) shows larger air bubbles and pores, flared voids where large amounts of water has escaped. In contrast, the film having a 70:30 ratio between the hydroxypropylated, cross-linked tapioca starch and the acetylated high amylose maize starch (Figure 5A) shows small pores of even shape and size, indicating less moisture loss.

Water vapor escape from conventional battered food products typically causes discontinuities in batter films, such as large surface pores with flared voids that allow oil to permeate the batter into the food product. The continuous batters of the present disclosure have reduced permeability to oil. The continuous films of the product and processes disclosed herein are typically substantially intact through frying, optionally through multiple frying stages and into a post cooking stage where the food products are held after cooking. The continuous surface optionally shows pores of substantially even shape and size under stereomicroscopy, typically with an absence of flared voids in the surface. Since the pores are small in the continuous surface, a majority of the oil present, by weight, for a particular French fry after removal from the fryer may pool on the surface of the French fry, or in the upper portion of the cooked batter surface, rather than with conventional batters where oil is substantially permeating the entirety of the batter through to the portion of the cooked batter proximate to the potato and into the potato itself.

### IV. Hot Stage Microscopy Images

Exemplary hot stage microscopy images (10°C per minute) are shown in Figure 6A and Figure 6B. Both hot stage images show a mixture comprising a hydroxypropylated, cross-linked tapioca starch (Purity 4) and an acetylated, high amylose maize starch (Crispfilm) in a ratio by weight of the hydroxypropylated, cross-linked tapioca starch to the acetylated high amylose maize starch of about 70:30 in excess water. The formulation also includes rice flour, xanthan gum, colors and salt. The tapioca starch begins to swell at 55°C and is shown in Figure 6A as the swollen granules. The small, round granules shown in Figure 6A are granules of the high amylose maize starch. The tapioca starch shows a larger swelling power at 80°C and the high amylose maize starch shows minimal and restricted swelling (Figure 6B). A continuous film is formed.

### V. Working Theory

While not wishing to be limited by theory, a working theory has been developed for starch synergy and/or function in a step comprising par-frying a food product, for example a potato article such as a potato strip coated with an aqueous starch-containing batter of the present disclosure containing a water-binding starch, such as a hydroxypropylated, cross-linked starch, for example a tapioca starch, and a substituted high amylose maize starch. Water vapor kicks-in after 4-5 seconds of par-frying impacting, for example percent solids, oil temperature and pick-up. The water-binding starch such as a hydroxypropylated, cross-linked starch, for example a tapioca starch binds water and the substituted, high amylose maize starch sets down within the starch matrix in the first portion of the par-frying process. The water-binding starch continues to hold onto the water throughout the frying time of, for example about 30 seconds, controlling and avoiding its release, which inhibits oil penetration at this stage. For example, in a two stage frying process, the water-binding starch binds the moisture in the first stage of frying and continues to function in the second stage. The moisture loss profile (i.e. the manner in which the coating is dehydrated during heating and phase transition) of the starch-containing coating comprising these two starches goes from liquid to viscous to sticky and rubbery to partly dry and glassy but still functional throughout the par-frying time of, for example about 30 seconds.

While the present disclosure has been described with reference to what are presently considered to be the preferred examples, it is to be understood that the disclosure is not limited to the disclosed examples. To the contrary, the disclosure is intended to cover various modifications and equivalent arrangements included within the scope of the appended claims.

**Table 1: Selected properties of water-binding starches**

| **Brand Name** | **Base** | **Amylose (wt%)** | **Modification(s)** | **Tolerance to Processing²** |
|---|---|---|---|---|
| PURITY 4 | tapioca | 17 | E1442: hydroxypropyl di-starch phosphate¹ | moderate |
| PURITY 87 | tapioca | 17 | E1442: hydroxypropyl di-starch phosphate¹ | high |
| PURITY NCSA | maize | 25 | E1412: acetylated di-starch phosphate | high |
| PURITY SCSA | waxy maize | <1 | E1412: acetylated di-starch phosphate | high |
| NATIONAL FRIGEX HV | tapioca | 17 | E1442: hydroxypropyl di-starch phosphate¹ | low-moderate |

| | | | | |
|---|---|---|---|---|
| ¹ PURITY 4, PURITY 87 and NATIONAL FRIGEX HV have different levels of cross-linking. ² Includes how tolerant the starch is to break down, shear and pH stability. | | | | |

**Table 2: Selected properties of high amylose maize starches**

| **Brand Name** | **Base** | **Amylose (wt%)** | **Modification(s)** | **Tolerance to Processing¹** |
|---|---|---|---|---|
| CRISPFILM | high amylose maize | 50 or 68 | E1420: acetylated starch | moderate |
| HYLON V | high amylose maize | 50 | none | high |
| HYLON VII | high amylose maize | 70 | none | high |
| HYLON VIII | high amylose maize | 80 | none | high |

| | | | | |
|---|---|---|---|---|
| ¹ Includes how tolerant the starch is to break down, shear and pH stability. | | | | |

**Table 3**

| **Trial** | **Starch(es)¹** | **Ratio** | **Fat Reduction vs. Control 11.55g/100g (%)** |
|---|---|---|---|
| 1 | CRISPFILM | 100 | 16.8 |
| 2 | HYLON VII | 100 | 19.9 |
| 3 | PURITY 4 | 100 | 19.9 |
| 4 | PURITY NCSA | 100 | 16.9 |
| 5 | PURITY SCSA | 100 | 20.3 |
| 6 | PURITY NCSA : CRISPFILM | 70:30 | 27.3 |
| 7 | PURITY SCSA : CRISPFILM | 70:30 | 25.5 |
| 8* | PURITY 4 : CRISPFILM | 70:30 | 28.2 |
| 9 | PURITY NCSA : HYLON VII | 70:30 | 16.0 |
| 10 | PURITY SCSA : HYLON VII | 70:30 | 20.3 |
| 11 | PURITY 4: HYLON VII | 70:30 | 16.9 |

| | | | |
|---|---|---|---|
| ¹ Trials conducted with CRISPFILM having an amylose content of 68 wt%. * Trials conducted with an aqueous composition falling within the appended claims. | | | |

**Table 4**

| **Trial** | **Starch** | **wt% starch¹** | **Fat Content (wt%)** | **Fat Reduction vs. Control² 11.55 g/100g (%)** |
|---|---|---|---|---|
| 1 | PURITY 4 | 65 | 10.26 | 11.2 |
| 2 | PURITY 4 | 75 | 9.95 | 13.9 |
| 3 | PURITY 4 | 85 | 9.99 | 13.5 |

| | | | | |
|---|---|---|---|---|
| ¹ On a dry weight basis. ² Fat content of control tested on the same day as trials 1-3 was 12.67 g/100g. | | | | |

**Table 5**

| **Trial** | **Starches¹** | **Moisture (wt%)** | **Fat (wt%)** | **Average Fat (wt%)** |
|---|---|---|---|---|
| 1* | PURITY 4 : CRISPFILM (70:30) | 56.48 | 8.11 | 8.29 |
| | | 54.73 | 8.47 | |
| 2 | PURITY 4 : CRISPFILM (50:50) | 58.57 | 7.23 | 7.23 |
| | | 59.09 | 7.22 | |
| 3 | PURITY 4 : CRISPFILM (30:70) | 61.76 | 7.06 | 7.41 |
| | | 59.72 | 7.76 | |
| 4 | PURITY 4 : CRISPFILM (0:100) | 51.40 | 10.11 | 9.61 |
| | | 53.17 | 9.11 | |
| 5 | PURITY 4 : CRISPFILM (100:0) | 54.03 | 9.03 | 9.25 |
| | | 53.16 | 9.46 | |

| | | | | |
|---|---|---|---|---|
| ¹ Trials conducted with CRISPFILM having an amylose content of 68 wt%. * Trials conducted with an aqueous composition falling within the appended claims. | | | | |

**Table 6**

| **Trial** | **Starches** | **Fat Content (wt%)** | **Fat Reduction vs. Control² 11.55g (wt%)** |
|---|---|---|---|
| 1 | PURITY 4 : HYLON V (70:30) | 11.0 | 4.8 |
| 2 | PURITY 4 : HYLON VII (70:30) | 9.6 | 16.9 |
| 3 | PURITY 4 : HYLON VIII (70:30) | 10.1 | 12.55 |
| 4* | PURITY 4 : CRISPFILM (70:30)¹ | 9.7 | 16.0 |

| | | | |
|---|---|---|---|
| ¹ CRISPFILM having an amylose content of 68 wt%. ² Fat content of control tested on the same day as trials 1-4 was 14.30 g/100g. * Trials conducted with an aqueous composition falling within the appended claims. | | | |

**Table 7**

| **Trial** | **Starches¹** | **Ratio** | **Amylose Content (wt%)** | **Solids (wt%)** | **Fat (g/100g)** |
|---|---|---|---|---|---|
| 1* | PURITY 4 : CRISPFILM | 70:30 | 26.9 | 36.50 | 8.76 |
| 2* | PURITY 4 : CRISPFILM | 60:40 | 30.2 | 36.60 | 8.53 |
| 3 | PURITY 4 : CRISPFILM | 50:50 | 33.5 | 35.20 | 8.92 |
| 4 | PURITY 4 : CRISPFILM | 40:60 | 36.8 | 37.30 | 7.37 |
| 5 | PURITY 4 : CRISPFILM | 30:70 | 40.1 | 36.70 | 8.18 |
| 6 | PURITY 4 : HYLON VII | 70:30 | 32.3 | 37.50 | 7.52 |
| 7 | PURITY 4 : HYLON VII | 60:40 | 37.2 | 35.90 | 7.19 |
| 8 | PURITY 4 : HYLON VII | 50:50 | 42.5 | 37.10 | 7.94 |
| 9 | PURITY 4 : HYLON VII | 40:60 | 47.6 | 36.00 | 8.41 |
| 10 | PURITY 4 : HYLON VII | 30:70 | 57.7 | 36.80 | 7.93 |
| 11 | PURITY 4 : HYLON V | 70:30 | 26.9 | 36.80 | 8.18 |
| 12 | PURITY 4 : HYLON V | 60:40 | 30.2 | 36.30 | 7.70 |
| 13 | PURITY 4 : HYLON V | 50:50 | 33.5 | 37.10 | 7.85 |
| 14 | PURITY 4: HYLON V | 40:60 | 36.8 | 37.20 | 8.26 |
| 15 | PURITY 4 : HYLON V | 30:70 | 40.1 | 37.30 | 9.64 |

| | | | | | |
|---|---|---|---|---|---|
| ¹ Trials conducted with CRISPFILM having an amylose content of 50 wt%. * Trials conducted with an aqueous composition falling within the appended claims. | | | | | |

**Table 8**

| **Trial** | **Starches¹** | **Dry Loss (wt%)²** | **Process Method** | **Moisture (wt%)** | **Fat (wt%)** |
|---|---|---|---|---|---|
| control | - | 8% | 30 sec flash fry (185°C) | 53.71 | 10.61 |
| | | | | 54.04 | 11.92 |
| 1* | PURITY 4 : CRISPFILM (70:30) | 8% | 30 sec flash fry (185°C) | 57.18 | 7.62 |
| | | | | 56.20 | 7.43 |
| 2* | PURITY 4 : CRISPFILM (70:30) | 10% | 30 sec flash fry (185°C) | 58.20 | 7.88 |
| | | | | 58.59 | 7.77 |
| 3* | PURITY 4 : CRISPFILM (70:30) | 15% | 30 sec flash fry (185°C) | 55.80 | 8.66 |
| | | | | 53.98 | 9.09 |
| 4* | PURITY 4 : CRISPFILM (70:30) | 20% | 30 sec flash fry (185°C) | 53.96 | 8.04 |
| | | | | 54.03 | 7.92 |

| | | | | | |
|---|---|---|---|---|---|
| ¹ Trials conducted with CRISPFILM having an amylose content of 50 wt%. ² In drying step subsequent to dipping step. * Trials conducted with an aqueous composition falling within the appended claims. | | | | | |

## Claims

1. An aqueous composition for coating a food product, the aqueous composition comprising:
a hydroxypropylated, cross-linked tapioca starch; and
an acetylated, high amylose maize starch,
wherein the hydroxypropylated, cross-linked tapioca starch is present in an amount of from 45 wt% to 65 wt% on a dry weight basis;
wherein the acetylated, high amylose maize starch is present in an amount of from 15 wt% to 35 wt% on a dry weight basis;
wherein the hydroxypropylated, cross-linked tapioca starch is a hydroxypropyl di-starch phosphate; and
wherein a ratio by weight of the hydroxypropylated, cross-linked tapioca starch to the acetylated, high amylose maize starch on a dry weight basis is from 60:40 to 80:20.

2. The aqueous composition of claim 1, further comprising xanthan gum.

3. The aqueous composition of claim 1 or 2, further comprising rice flour.

4. The aqueous composition of any one of claims 1 to 3, further comprising salt.

5. The aqueous composition of any one of claims 1 to 4, further comprising at least one coloring agent.

6. The aqueous composition of any one of claims 1 to 5, wherein the food product is a fried, coated vegetable article.

7. The aqueous composition of any one of claims 1 to 5, wherein the food product is a fried, coated potato article.

8. The aqueous composition of claim 7, wherein the fried, coated potato article is a fried, coated French fry.

9. The aqueous composition of claim 7, wherein the fried, coated potato article is a fried, coated sweet potato fry.

10. A process for preparing fried, coated food products, the process comprising:
coating food products with an aqueous starch-containing batter comprising an aqueous composition of any one of claims 1 to 5 to obtain batter-coated food products; and
frying the batter-coated food products to obtain the fried, coated food products.

11. The process of claim 10, wherein the process is a process for preparing fried, coated vegetable articles, the process comprising:
coating blanched vegetable articles with the aqueous starch-containing batter to obtain batter-coated vegetable articles; and
frying the batter-coated vegetable articles to obtain the fried, coated vegetable articles.

12. The process of claim 11, wherein the vegetable articles are potato articles.

13. The process of claim 12, wherein the blanched potato articles are prepared by a process comprising:
blanching potato articles under conditions to obtain freshly blanched potato articles;
dipping the freshly blanched potato articles in a solution that inhibits discoloration of the blanched potato articles to obtain blanched, dipped potato articles; and
partially drying the blanched, dipped potato articles under conditions to obtain a moisture reduction of from 8 wt% to 10 wt% in the freshly blanched potato articles to obtain the blanched potato articles.

14. The process of claim 12 or 13, wherein the process is for preparing a fried, coated French fry.

15. The process of claim 12 or 13, wherein the process is for preparing a fried, coated sweet potato fry.

## Patentansprüche

1. Wässrige Zusammensetzung zum Beschichten eines Lebensmittelprodukts, wobei die wässrige Zusammensetzung umfasst:
eine hydroxypropylierte, vernetzte Tapiokastärke; und
eine acetylierte, amylasereiche Maisstärke,
wobei die hydroxypropylierte, vernetzte Tapiokastärke in einer Menge von 45 Gew.-% bis 65 Gew.-% auf Trockengewichtsbasis vorliegt;
wobei die acetylierte, amylosereiche Maisstärke in einer Menge von 15 Gew.-% bis 35 Gew.-% auf Trockengewichtsbasis vorliegt;
wobei die hydroxypropylierte, vernetzte Tapiokastärke ein Hydroxypropyldistärkephosphat ist; und
wobei ein Gewichtsverhältnis der hydroxypropylierten, vernetzten Tapiokastärke zu der acetylierten, amylosereichen Maisstärke auf Trockengewichtsbasis von 60:40 bis 80:20 beträgt.

2. Wässrige Zusammensetzung nach Anspruch 1, ferner umfassend Xanthangummi.

3. Wässrige Zusammensetzung nach Anspruch 1 oder 2, die ferner Reismehl enthält.

4. Wässrige Zusammensetzung nach einem der Ansprüche 1 bis 3, die ferner Salz enthält.

5. Wässrige Zusammensetzung nach einem der Ansprüche 1 bis 4, ferner enthaltend mindestens ein Färbemittel.

6. Wässrige Zusammensetzung nach einem der Ansprüche 1 bis 5, wobei das Lebensmittelprodukt ein in Fett ausgebackenes, beschichtetes Gemüseerzeugnis ist.

7. Wässrige Zusammensetzung nach einem der Ansprüche 1 bis 5, wobei das Lebensmittelprodukt ein in Fett ausgebackenes, beschichtetes Kartoffelerzeugnis ist.

8. Wässrige Zusammensetzung nach Anspruch 7, wobei das in Fett ausgebackene, beschichtete Kartoffelerzeugnis in Fett ausgebackene, beschichtete Pommes frites sind.

9. Wässrige Zusammensetzung nach Anspruch 7, wobei das in Fett ausgebackene, beschichtete Kartoffelerzeugnis in Fett ausgebackene, beschichtete Süßkartoffel-Pommes frites sind.

10. Verfahren zur Herstellung von in Fett ausgebackenen, beschichteten Lebensmittelprodukten, wobei das Verfahren umfasst:
Beschichten von Lebensmittelprodukten mit einem wässrigen stärkehaltigen Teig, umfassend eine wässrige Zusammensetzung nach einem der Ansprüche 1 bis 5, um mit Teig beschichtete Lebensmittelprodukte zu erhalten; und
Ausbacken in Fett der mit Teig beschichteten Lebensmittelprodukte, um die in Fett ausgebackenen, beschichteten Lebensmittelprodukte zu erhalten.

11. Verfahren nach Anspruch 10, wobei das Verfahren ein Verfahren zur Herstellung von in Fett ausgebackenen, beschichteten Gemüseerzeugnissen ist, wobei das Verfahren umfasst:
Beschichten von blanchierten Gemüseerzeugnissen mit dem wässrigen stärkehaltigen Teig, um mit Teig beschichtete Gemüseerzeugnisse zu erhalten; und
Ausbacken in Fett der mit Teig beschichteten Gemüseerzeugnisse, um die in Fett ausgebackenen, beschichteten Gemüseerzeugnisse zu erhalten.

12. Verfahren nach Anspruch 11, wobei die Gemüseerzeugnisse Kartoffelerzeugnisse sind.

13. Verfahren nach Anspruch 12, bei dem die blanchierten Kartoffelerzeugnisse durch ein Verfahren hergestellt werden, das folgendes umfasst:
Blanchieren von Kartoffelerzeugnissen unter Bedingungen, um frisch blanchierte Kartoffelerzeugnisse zu erhalten;
Eintauchen der frisch blanchierten Kartoffelerzeugnisse in eine Lösung, die eine Verfärbung der blanchierten Kartoffelerzeugnisse verhindert, um blanchierte, eingetauchte Kartoffelerzeugnisse zu erhalten; und
teilweises Trocknen der blanchierten, eingetauchten Kartoffelerzeugnisse unter Bedingungen, um eine Feuchtigkeitsreduktion von 8 Gew.-% bis 10 Gew.-% in den frisch blanchierten Kartoffelerzeugnissen zu erhalten, um die blanchierten Kartoffelerzeugnisse zu erhalten.

14. Verfahren nach Anspruch 12 oder 13, wobei das Verfahren zur Herstellung von in Fett ausgebackenen, beschichteten Pommes Frites dient.

15. Verfahren nach Anspruch 12 oder 13, wobei das Verfahren zur Herstellung von in Fett ausgebackenen, beschichteten Süßkartoffel-Pommes Frites dient.

## Revendications

1. Composition aqueuse pour enrober un produit alimentaire, la composition aqueuse comprenant :
un amidon de tapioca réticulé hydroxypropylé, et
un amidon de maïs acétylé à forte teneur en amylose,
dans laquelle l'amidon de tapioca réticulé hydroxypropylé est présent en une quantité de 45 % en poids à 65 % en poids sur une base en poids sec ;
dans laquelle l'amidon de maïs acétylé à forte teneur en amylose est présent en une quantité de 15 % en poids à 35 % en poids sur une base en poids sec ;
dans laquelle l'amidon de tapioca réticulé hydroxypropylé est un phosphate d'hydroxypropyl-diamidon ; et
dans laquelle le rapport en poids de l'amidon de tapioca réticulé hydroxypropylé à l'amidon de maïs acétylé à forte teneur en amylose, sur une base en poids sec, est de 60/40 à 80/20.

2. Composition aqueuse selon la revendication 1, comprenant en outre de la gomme xanthane.

3. Composition aqueuse selon la revendication 1 ou 2, comprenant en outre de la farine de riz.

4. Composition aqueuse selon l'une quelconque des revendications 1 à 3, comprenant en outre du sel.

5. Composition aqueuse selon l'une quelconque des revendications 1 à 4, comprenant en outre au moins un agent colorant.

6. Composition aqueuse selon l'une quelconque des revendications 1 à 5, dans laquelle le produit alimentaire est un article enrobé frit à base de légume.

7. Composition aqueuse selon l'une quelconque des revendications 1 à 5, dans laquelle le produit alimentaire est un article enrobé frit à base de pomme de terre.

8. Composition aqueuse selon la revendication 7, dans laquelle l'article enrobé frit à base de pomme de terre est une frite enrobée frite.

9. Composition aqueuse selon la revendication 7, dans laquelle l'article enrobé frit à base de pomme de terre est une frite de patate douce enrobée frite.

10. Procédé pour préparer des produits alimentaires enrobés frits, le procédé comprenant :
l'enrobage de produits alimentaires avec une pâte à frire aqueuse contenant de l'amidon, comprenant une composition aqueuse selon l'une quelconque des revendications 1 à 5, pour que soient obtenus des produits alimentaires enrobés de pâte à frire ; et
la friture des produits alimentaires enrobés de pâte à frire pour que soient obtenus les produits alimentaires enrobés frits.

11. Procédé selon la revendication 10, lequel procédé est un procédé pour préparer des articles enrobés frits à base de légumes, le procédé comprenant :
l'enrobage d'articles blanchis à base de légumes avec la pâte à frire aqueuse contenant de l'amidon pour que soient obtenus des articles à base de légumes enrobés de pâte à frire ; et
la friture des articles à base de légumes enrobés de pâte à frire pour que soient obtenus les articles à base de légumes enrobés frits.

12. Procédé selon la revendication 11, dans lequel les articles à base de légumes sont des articles à base de pomme de terre.

13. Procédé selon la revendication 12, dans lequel les articles à base de pomme de terre blanchis sont préparés par un procédé comprenant :
le blanchiment d'articles à base de pomme de terre dans des conditions assurant l'obtention d'articles à base de pomme de terre fraîchement blanchis ;
le trempage des articles à base de pomme de terre fraîchement blanchis dans une solution qui inhibe la décoloration des articles à base de pomme de terre fraîchement blanchis pour que soient obtenus des articles à base de pomme de terre blanchis trempés ; et
le séchage partiel des articles à base de pomme de terre blanchis trempés dans des conditions assurant une réduction de l'humidité de 8 % en poids à 10 % en poids dans les articles à base de pomme de terre fraîchement blanchis pour que soient obtenus les articles à base de pomme de terre blanchis.

14. Procédé selon la revendication 12 ou 13, lequel procédé est destiné à la préparation d'une frite enrobée frite.

15. Procédé selon la revendication 12 ou 13, lequel procédé est destiné à la préparation d'une frite de patate douce enrobée frite.
